Europäisches Patentamt

European Patent Office

Office européen des brevets

(19)

(11) Veröffentlichungsnummer: **0 196 049**
**A2**

(12) **EUROPÄISCHE PATENTANMELDUNG**

(21) Anmeldenummer: **86104019.4**

(22) Anmeldetag: **24.03.86**

(51) Int. Cl.⁴: **G 01 B 11/24**

(30) Priorität: **28.03.85 DE 3511347**

(43) Veröffentlichungstag der Anmeldung: **01.10.86**
**Patentblatt 86/40**

(84) Benannte Vertragsstaaten: **AT BE CH DE FR GB IT LI LU NL SE**

(71) Anmelder: **Häusler, Gerd, Dr., Alterlanger Strasse 33, D-8520 Erlangen (DE)**

(72) Erfinder: **Häusler, Gerd, Dr., Alterlanger Strasse 33, D-8520 Erlangen (DE)**

(74) Vertreter: **Weber, Otto Ernst, Dipl.-Phys., Hofbrunnstrasse 36, D-8000 München 71 (DE)**

(54) Verfahren und Vorrichtung zur optischen mehrdimensionalen Formerfassung eines Objekts.

(57) Die Erfindung betrifft ein Verfahren und eine Vorrichtung zur optischen mehrdimensionalen Formerfassung eines Objektes speziell bei strukturarmen, diffus streuenden Objekten. Die Erfindung geht den Weg, die Signalminima im Bild des Objektes zu erfassen, auf das ein Gitter mit geringer Schärfentiefe abgebildet wird.

- 1 -

Verfahren und Vorrichtung zur optischen mehrdimensionalen
Formerfassung eines Objektes

---

Die Erfindung betrifft ein Verfahren zur optischen mehrdimensionalen Formerfassung eines Objektes gemäß Oberbegriff des Anspruches 1 und eine Vorrichtung gemäß Oberbegriff
des Anspruches 7.

Speziell bezieht sich die Erfindung auf die Formerfassung
bzw. mehrdimensionale Vermessung von strukturarmen, diffus
streuenden Objekten. In der Praxis stellen sich häufig Vermessungsprobleme bei dreidimensionalen Objekten, deren örtliches Reflexionsvermögen eine geringe Struktur aufweist.

Für die Formerfassung oder Vermessung bei stärker strukturierten, diffus streuenden Objekten ist ein optisches Verfahren bekannt, das auf der Bestimmung des besten Fokus
beruht (G. Häusler, E. Körner; Proc. of 6th Int. Conf. on
Pattern Recognition, 1982, 1201, IEEE Computer Society Press,
Silver Spring, MD, USA). Bei diesem bekannten Verfahren wird
das zu vermessende Objekt mit geringer Schärfentiefe abgebildet. Anschließend wird geprüft, welche Objektsegmente im
Fokus der Abbildungsoptik liegen. Dazu wird die Variation der
Objektintensität entlang der Fokussierrichtung (z) benutzt.
Die Abbildung des Objektes mit geringer Schärfentiefe, z.B.
in der z-Richtung, dient dazu, Objektsegmente, die außerhalb
der Fokusebene liegen, genau unterscheiden zu können, da die
außerhalb der Fokusebene liegende Struktur des zu vermessenden
Objektes unscharf wiedergegeben wird.

Definiert man z.B. die x-y-Ebene als Fokusebene, so kann
das zu vermessende Objekt nach der Erfassung der im vorausgehenden Verfahrensschritt als scharf ermittelten Objektsegmente, in z-Richtung verschoben werden. Nach diesem im z-Richtung erfolgten Verschiebeschritt des Objektes, werden alle Objektsegmente, die nunmehr in die Fokusebene fallen, als scharfe Bildsegmente abgebildet. Mit anderen Worten kann somit durch Aufnehmen einer Fokusreihe sequentiell die 3-dimensionale Struktur des Objektes bestimmt werden.

Dieses bekannte Verfahren kann jedoch bei Objekten mit örtlich schwach strukturiertem Reflexionsvermögen nicht mehr angewandt werden, da in diesen Fällen die Variation der Intensität entlang der Fokussierungsrichtung zu gering ist, um eine genaue Fokus-Detektion zu ermöglichen.

In einer anderen Methode ist man dazu übergegangen, ein Gitter kohärent auf das zu vermessende Objekt zu projizieren. Die Erfassung der z-Koordinaten der Objektsegmente in einer Abbildungsoptik kann bei diesem Verfahren anhand des Kontrastunterschiedes des Gitters auf dem Objekt ermittelt werden.

Dieses vorgenannte Verfahren erlaubt zwar prinzipiell die mehrdimensionale Formerfassung eines Objektes. Schwierigkeiten und Probleme bei diesem Verfahren ergeben sich jedoch dadurch, daß die Kontrastmessung und optische Kontrastauswertung keine große Genauigkeit aufweist: Man kann also bei dem vorgeschlagenen Verfahren nicht gleichzeitig eine hohe Tiefenauflösung und einen großen Meßbereich erzielen. Des weiteren erfordert die Kontrastmessung einen ausgedehnteren Flächenbereich auf dem Objekt und eine Kompensation der mittleren Helligkeit des Objekts. Da das vorgeschlagene Verfahren auf die Verwendung kohärenten Laserlichts zur Gitterprojektion angewiesen ist, wird die Kontrastmessung durch den Einfluß des kohärenten Rauschens zusätzlich erschwert.

- 3 -

Der Erfindung liegt die Aufgabe zugrunde, ein Verfahren und eine Vorrichtung zur optischen mehrdimensionalen Formerfassung eines diffus streuenden, gegebenenfalls strukturarmen Objektes so zu schaffen, daß diese Erfassung auch im kleinen Flächenbereich mit hoher Tiefenauflösung und großem Meßbereich, insbesondere hauptsächlich senkrecht zu einer fiktiven Fokusebene des Abbildungssystems, möglich ist.

Diese Aufgabe wird bei einem gattungsgemäßen Verfahren erfindungsgemäß durch die Merkmale des kennzeichnenden Teils des Anspruches 1 und bei einer gattungsgemäßen Vorrichtung durch die Merkmale des kennzeichnenden Teils des Anspruches 7 gelöst.

Ein wesentlicher Gedanke der Erfindung beruht darauf, die Periodizität des verwendeten Gitters auszunutzen. Hierbei geht man den Weg, daß dieses auf das zu vermessende Objekt projizierte Gitter abbildungsseitig im elektrischen Bildsignal vorhanden ist und durch Festlegung eines geeigneten Signalpegels in Relation zum elektrischen Gittersignal die in der eingestellten Fokusebene liegenden Objektsegmente präzise bestimmbar sind.

Erfindungsgemäß wird daher das Bild des mit dem Gitter versehenen Objektes zunächst in elektrische Signale umgewandelt, wobei dies in einfacher Weise z.B. durch Bildaufnahmeröhren nach dem Prinzip eines Orthikons, eines Vidikons oder eines Festkörper-Sensors, z.B. eines CCD-Arrays, geschehen kann.

Geht man daher davon aus, daß am Ausgang eines abbildungsseitig verwendeten Bildwandlers eine Art eines Videosignales entsteht, so liefert eine in der eingestellten Fokusebene liegende Gitterlinie einen maximalen Kontrast an der Grenze zu
dem wesentlich helleren Objektsegment. Sofern dunkle Gitterlinien abgebildet werden, zeigen diese in der Fokusebene liegenden Gitterlinien ein elektrisches Signal, dessen Pegel im
Bereich des Schwarz- oder Graupegels liegt. Zur einfacheren
Erläuterung sei angenommen, daß der Schwarzpegel des erzeugten elektrischen Bildsignales der Null-Pegel sei. Selbstverständlich könnte der Schwarzpegel auch ähnlich wie beim Videosignal nach CCIR-Norm als höchster Kontrastpegel definiert
sein, so daß auf ein Überschreiten dieses Pegels zu detektieren
wäre.

Bei der Erfindung werden daher die im elektrischen Bildsignal vorhandenen Gittersignale darauf überprüft, ob sie
einen bestimmten Signalpegel in Richtung zum Schwarzpegel
unterschreiten. Mit anderen Worten werden die fokussierten
dunklen Gitterstriche, die die dunkelsten Stellen im Videosignal sind, detektiert. Da dies zuverlässig und rasch festgestellt werden kann, werden daher beim erfindungsgemäßen
Verfahren und mit der entsprechenden Vorrichtung mit sehr
hoher Präzision die Objektsegmente detektiert, die exakt in der
eingestellten Fokusebene liegen.

Das erfindungsgemäße Verfahren hat zudem den Vorteil, daß es
nicht nur im Rahmen einer mehrdimensionalen Formerfassung
eines Objektes, speziell zur Erfassung der Parameter des
Objektes in einer Richtung, die etwa senkrecht zur vorgegebenen Fokusebene der Abbildungsoptik möglich ist, verwendbar ist, sondern daß auch eine Abbildung des Objektes mit erweiterter Schärfentiefe durchgeführt werden kann.

Mittels des erfindungsgemäßen Verfahrens werden für jede eingestellte Fokusebene die in dieser Fokusebene liegenden Objektsegmente aufgrund einer Sollwertunterschreitung des elektrischen Gittersignales in Richtung zum Schwarzpegel ermittelt und in einem Bildspeicher zusammen mit den Koordinaten der zugehörigen Fokusebene abgespeichert. Durch sequentielles Fokussieren erhält man somit die genauen Parameter des zu erfassenden Objektes in Richtung der relativen Verschiebung der Fokusebene.

Der Begriff des sequentiellen Fokussierens beinhaltet dabei, daß die durch das Abbildungssystem vorgegebene Fokusebene festliegen kann, aber das zu erfassende bzw. zu vermessende Objekt senkrecht zu dieser Fokusebene verschiebbar ist. Durch Verschieben des Objektes senkrecht zur Fokusebene, kommen immer wieder neue Objektschnitte in der Fokusebene zu liegen, wobei dies als sequentielles Fokussieren bezeichnet wird. Denkbar ist auch, daß das Objekt festliegt und die Fokusebene variiert wird.

Bei der Vermessung oder Formerfassung des Objektes besteht vorteilhafterweise die Möglichkeit, jedem in der eingestellten Fokusebene liegenden Bildsegment einen kodierten Wert zuzuordnen, der z.B. aus der Verschiebung des Objektes aus seiner Null-Lage resultiert. Dieser kodierte Wert kann z.B. binär in dem entsprechenden Speicherplatz des als scharf detektierten Bildsegmentes abgespeichert werden. Der kodierte Wert stellt daher unmittelbar eine Maßangabe für das entsprechende Objektsegment in z-Richtung dar.

Sofern das erfindungsgemäße Verfahren zur Abbildung eines Objektes mit erweiterter Schärfentiefe eingesetzt werden soll,

- 6 -

kann dies in einem weiteren ergänzenden Schritt erfolgen. Nach der Projektion des Gitters mit sich identisch wiederholender Gitterstruktur auf das Objekt und der Ermittlung der in der eingestellten Fokusebene liegenden Objektsegmente, bilden diese Speicherbereiche eine Art Maske. In einem nachfolgenden zweiten Schritt wird das Objekt dann gleichförmig beleuchtet, ohne daß auf das Objekt ein Gitter projiziert wird. Da die Fokusebene unverändert blieb, können nunmehr nach einer Analog-Digital-Umwandlung die in vorausgehenden Verfahrensschritte als "scharf" markierten Bereiche der Maske die entsprechenden Bildinformationen aufnehmen. Da auch der zweite Schritt bei jedem sequentiellen Fokussieren wiederholt wird, kann auf diese Weise ein Bild mit erweiterter Schärfentiefe erzeugt werden, das sich aus den einzelnen scharfen Bildsegmenten der sequentiell eingestellten Tiefenstufen zusammensetzt.

Bei der Erzeugung des Gitters auf dem Objekt bestehen generell unterschiedliche Möglichkeiten. Sofern beabsichtigt ist, ein Gittersystem zu erreichen, das entlang der gesamten optischen Achse scharf ist, wird das Gitter vorteilhafterweise durch Interferenz zweier kohärenter Wellen im Objektraum erzeugt. Hierdurch können sehr feine Gitter mit hohem Kontrast auf dem Objekt erzeugt werden. Im Vergleich zu den Vorteilen des feinen Gitters und des hohen Kontrastes, können gewisse Schwierigkeiten, wie kohärentes Rauschen bzw. Speckle auf der Abbildungsseite in Kauf genommen werden, zumal deren Wirkung verringert werden kann. Hierzu bedarf es einer Apertur der Abbildungseinrichtung von einer Größe, daß der Durchmesser der Speckle kleiner ist als der Durchmesser des Punktbildes des optisch-elektronischen Wandlers der Abbildungseinrichtung.

- 7 -

Wird bei der Projektion des Gitters inkohärentes Licht verwendet, so kann man die Empfindlichkeit gegen Verschiebung in der z-Richtung, also senkrecht zur Fokusebene, noch dadurch erhöhen, daß durch eine begrenzte Schärfentiefe in der Projektion und in der Abbildung eine geringere Schärfentiefe erreicht wird, wodurch Bildsegmente, die nur geringfügig außerhalb der Fokusebene $z_0$ liegen als unscharf aufgenommen werden.

Eine Maßnahme zur Realisierung der Erfindung besteht darin, eine gemeinsame identische Fokusebene für das Projektionssystem und das Abbildungssystem beizubehalten. Bei der Vorrichtung ist zudem ein Bildwandler vorgesehen, der die Umwandlung der optisch abgebildeten Objektsegmente bzw. Objektbereiche in elektrische Bildsignale vornimmt. Unter Zugrundelegung eines Bildsignales in der Art eines Videosignales, kann zunächst eine Demodulation und Abtrennung der Synchronisationssignale durchgeführt werden, bevor das eigentliche Bildsignal einer Komparatorschaltung zugeführt wird.

Erfindungsgemäß werden daher keine Kontrastunterschiede ermittelt, sondern es werden in der Komparatorschaltung die Stellen mit minimalem Signalpegel detektiert. Durch dieses Prinzip können elektrische Gittersignale, die ein vorgebbares Sollsignal in Richtung zum maximalen Schwarzpegel unterschreiten bzw. schneiden, als Koordinate eines Objektsegmentes angesehen werden, das in der Fokusebene $z_0$ liegt.

Aufgrund einer derartig definierten Abweichung des elektrischen Bild- bzw. Gittersignals vom Sollsignal wird in einer Bildspeichereinrichtung ein dem abgetasteten, scharfen Bildsegment zugeordneter Speicherplatz belegt. Diese Belegung kann sowohl direkt wertmäßig als auch maskenartig oder bildmäßig erfolgen. Der entsprechende Speicherplatz kann z.B. wertmäßig durch Einschreiben eines mit Hilfe der zur Verschiebung des Objektes

- 8 -

verwendeten Verschiebeeinrichtung gewonnenen Wertes z durchgeführt werden. Bildmäßig ist z.B. an Farb- oder Kontrastunterschiede zu denken. Im Hinblick auf eine maskenmäßige Belegung
kann der entsprechende Speicherplatz z.B. voradressiert werden,
um in einem nachfolgenden Meßschritt die erhaltene Information
auf dem voradressierten Speicherplatz einschreiben zu können.

Die Objektabtastung bzw. die Auflösungsgenauigkeit des Bildwandlers wird vorzugsweise an die Gitterdimension und insbesondere an den Abstand zwischen zwei benachbarten Gitterlinien
angepaßt. Zweckmäßigerweise wird die Relation zwischen einem
kleinsten Bildpunkt des Bildwandlers, der auch als Pixel bezeichnet wird, und dem Gitter so gestaltet, daß ein Pixel etwa
den halben Abstand zwischen einem Gitterlinienpaar abdeckt und
nach Möglichkeit die entsprechende Gitterlinie bzw. deren Abbildung in die Mitte eines Pixels fällt. Neben dieser letztgenannten Ausbildung ist eine höhere Auflösung dann möglich,
wenn ein Pixel dimensionsmäßig kleinere Bereiche als den Abstand zwischen benachbarten Gitterlinien aufnimmt. Dies ist
deswegen vorteilhaft, da eine Mittelwertbildung des elektrischen
Signales und damit eine Kontrastmittlung unterbunden wird.

Bei der Detektion einer scharfen Gitterlinie durch Unterschreitung des definierten Sollsignales, kann zweckmäßigerweise eine
Weiterschaltung oder Triggerung beim Abtasten vorgesehen werden,
die einer Periode bzw. dem Zeitintervall zwischen einem Gitterlinienpaar entspricht. Hierdurch wird sichergestellt, daß für jedes
Ansprechen des Komparators mindestens zwei Pixel des Bildes dem
Adressbereich des Speichers zugeführt werden und keine Lücken im
gespeicherten Bildsignal entstehen.

Die Erfindung ermöglicht daher sehr genau und sicher die dreidimensionale Erfassung von auch strukturarmen Objekten, wobei
dies weitgehend unabhängig vom lokalen Reflexionsvermögen des
Objektes realisierbar ist.

Insbesondere werden die 3d-Form der Oberfläche z (x, y) und die
3d-Verteilung der Reflexion I (x, y, z) meßbar.

Die Erfindung wird nachstehend anhand schematischer Zeichnungen
mehrerer Alternativen noch näher erläutert. Es zeigen:

Fig. 1    eine schematische Draufsicht auf ein etwa in der
         x-z-Ebene vorgesehenes Projektions- und Abbildungssystems mit angedeutetem Strahlengang für eine Gitterprojektion mittels inkohärenter Beleuchtung auf ein
         Objekt;

Fig. 2    ein vergleichbar angeordnetes Projektions- und Abbildungssystem, das kohärentes Licht verwendet;

Fig. 3    einen schematisierten Verlauf des Signalpegels längs
         einer x-Richtung am Objekt, wie er z.B. einer Komparatoreinrichtung zugeführt werden kann;

Fig. 4    die schematische Darstellung eines Blockschaltbildes
         für eine wertmäßige Erfassung z.B. der Reflexion I
         (x, y, z) und Speicherung von Bildsegmenten des
         Objektes; und

Fig. 5    eine schematische Darstellung eines Blockschaltbildes
         für die Erfassung und Speicherung der dreidimensionalen
         Form z (x, y) des Objektes.

- 10 -

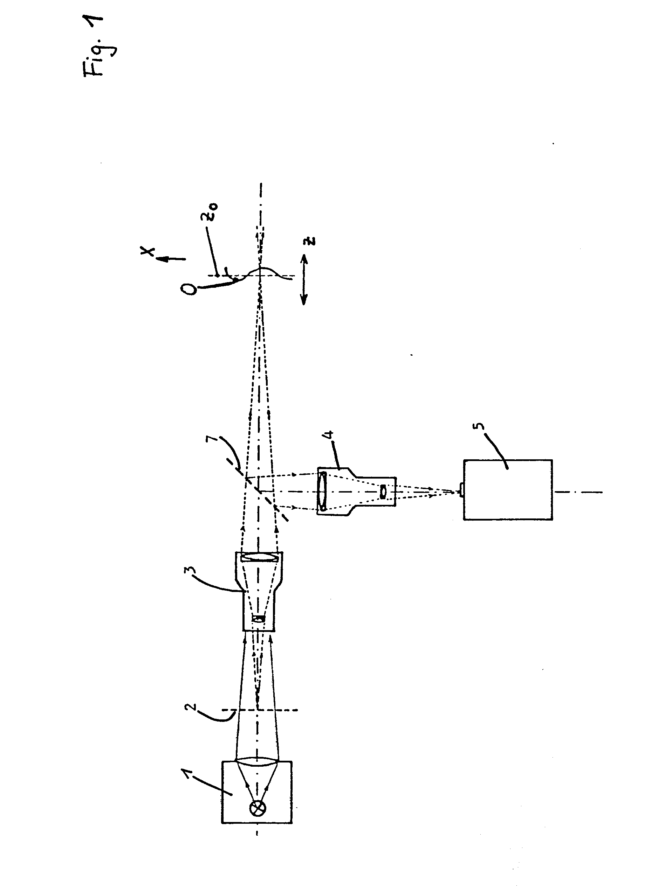

In Fig. 1 ist die schematische Draufsicht auf ein Projektions-
und Abbildungssystem dargestellt, das etwa in der x-z-Ebene vorgesehen ist. Das Projektionssystem weist dabei eine Beleuchtungseinrichtung 1 auf, von der inkohärente Wellen ausgehen können.
Im Strahlengang dieser Beleuchtungseinrichtung 1 ist zunächst
ein Gitter 2 vorgesehen, das identisch beabstandete Gitterlinien
aufweisen kann. Im weiteren Strahlengang ist dann die eigentliche
Projektionsoptik 3 angeordnet, die das Gitter in die Fokusebene $z_0$
abbildet.

Im Bereich dieser Fokusebene $z_0$ liegt auch ein zu vermessendes
Objekt O. Die Fokusebene $z_0$ wird in der weiteren Betrachtung aus
Vereinfachungsgründen als in die x-y-Ebene fallend angesehen. Die
Fokusebene $z_0$ bildet daher eine Schnittebene durch das Objekt O,
wobei die in dieser Schnittebene liegenden Objektsegmente im Abbildungssystem als scharf erkannt werden und dadurch die Koordinaten exakt ermittelt werden können.

In der Darstellung der Fig. 1 ist die Fokusebene $z_0$ als unterbrochene Linie dargestellt, die senkrecht zur optischen Achse
des Projektionssystems steht und ein nur partiell wellenförmig
angedeutetes Objekt O schneidet.

Zur Abbildung des Objektes O auf eine Abbildungseinrichtung 5,
die z.B. ein Vidikon sein kann, ist im Strahlengang zwischen der
Projektionsoptik 3 und dem Objekt O ein Teilerspiegel 7 angeordnet. Das weitgehend diffus am Objekt O gestreute Licht wird über
diesen Teilerspiegel 7 als Abbildungsstrahlen in eine Abbildungsoptik 4 abgelenkt.

Der Teilerspiegel 7 ist gegenüber der optischen Achse z.B. unter
45 Grad angeordnet, so daß das vom Objekt O reflektierte Licht
unter 90 Grad in die Abbildungsoptik 4 abgelenkt wird. Der Fokus
der Projektionsoptik 3 und der Abbildungsoptik 4 fallen in der
Fokusebene $z_0$ zusammen. Der Abbildungsoptik 4 nachgeschaltet
ist eine Abbildungseinrichtung 5, die z.B. als Bildwandler wie eine
TV-Kamera ausgelegt sein kann. Die Abbildungseinrichtung 5 wandelt
das abgebildete Objekt O in elektrische Bildsignale um, die z.B.
als Videosignal, einer weiteren Verarbeitung unterzogen werden
können.

Die Projektion des Gitters 2 auf das Objekt O erfolgt mit hohem
Kontrast, so daß in der Abbildungseinrichtung 5 anhand des minimalen Signales die Objektsegmente ermittelt werden können, die
exakt in der Fokusebene $z_0$ liegen.

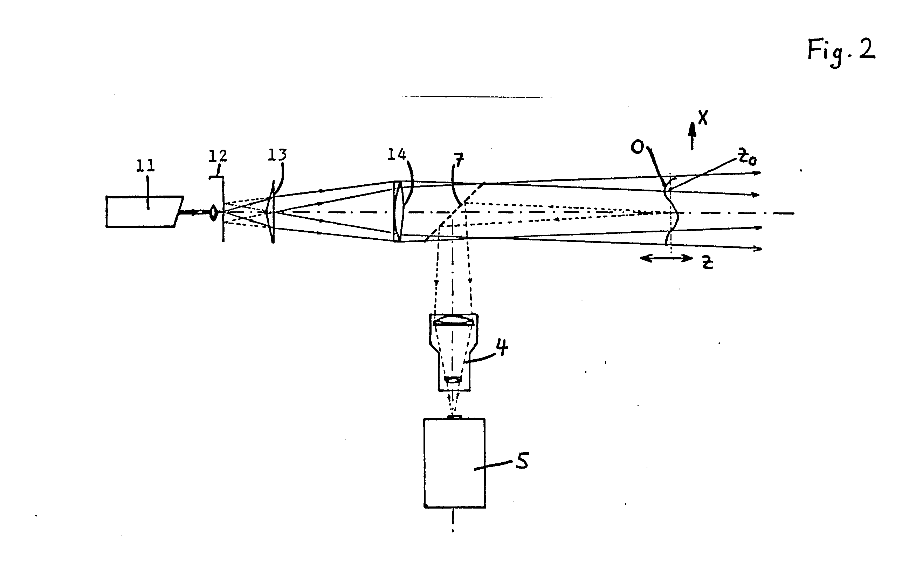

Eine andere Möglichkeit der Gitterprojektion ist in der schematischen Darstellung nach Fig. 2 gezeigt. Im Hinblick auf die
optischen Achsen entspricht das System nach Fig. 2 dem der
Fig. 1. Der Unterschied liegt jedoch darin, daß im Beispiel
nach der Fig. 2 kein konkretes Gitter verwendet wird, sondern
die Gitterstruktur durch die Interferenz zweier kohärenter Wellen
im Objektraum erzeugt wird. Hierzu ist ein Laser 11 vorgesehen,
dem in Richtung des Laserstrahles zunächst eine Aufweiteoptik 12,
ein Biprisma 13 und ein Kollimator 14 zugeordnet sind. In Richtung
des Laserstrahlenganges entsteht hinter dem Kollimator 14 durch
Interferenz ein Gitter, das durch einen Teilerspiegel 7 hindurch
auf das Objekt O abgebildet wird.

Der Teilerspiegel 7 ist dabei wie nach dem Beispiel der Fig. 1
im Strahlengang angeordnet. Das Objekt O liegt wiederum im Bereich der x-y-Ebene, wobei die Fokusebene $z_0$ eine Schnittebene

- 12 -

senkrecht zur optischen Achse durch das Objekt O bildet. Das diffus streuende Objekt O wird über den Teilerspiegel 7 und die Abbildungsoptik 4 in die Abbildungseinrichtung 5 abgebildet.

Die Abbildungseinrichtung 5 ist wieder vorteilhafterweise als bildgebender, positionsempfindlicher Detektor ausgebildet, dessen Bildsignal das Gitter bzw. die Gitterlinien als elektrisches Gittersignal mit periodischem Auftreten enthält.

Die Erfindung macht sich zunutze, daß auch bei strukturarmen Objekten O die in der Fokusebene $z_0$ liegenden Objektpunkte der Objektsegmente eine Abbildung des Gitters mit sehr hohem Kontrast bewirken. Das Bildsignal wird dementsprechend daraufhin geprüft, welche darin enthaltenen elektrischen Gittersignale ein minimales Signal aufweisen, wobei bei dunklen Gitterlinien eine Intensität nahe beim Schwarzpegel erwartet wird.

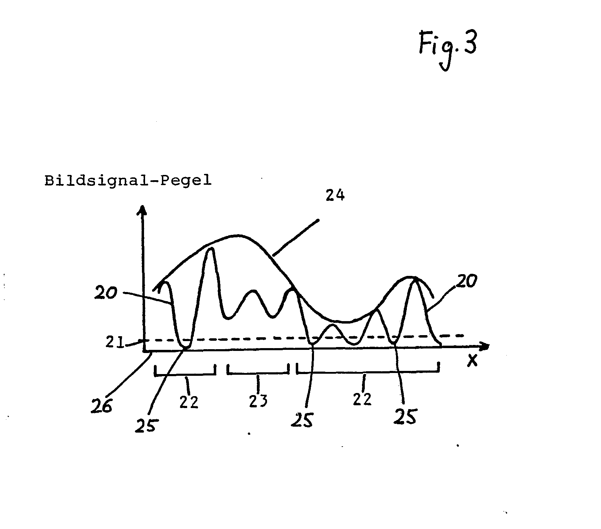

In Fig. 3 ist schematisch der Verlauf eines Bildsignal-Pegels in x-Richtung des Objektes dargestellt. Der Bildsignal-Pegel ist über die Ordinate aufgetragen, während die x-Richtung die Abszisse darstellt. Das elektrische Bildsignal 20 soll im Beispiel nach Fig. 3 einen in der Amplitude modulierten etwa sinusförmigen Verlauf aufweisen. Die auftretenden Minima des Bildsignals 20 weisen dabei weitgehend strenge Periodizität auf und kennzeichnen die auf das Objekt O projizierten Gitterlinien.

Die Abszisse x soll gleichzeitig den Schwarzpegel 26 darstellen. Über diesem Schwarzpegel ist mit 21 ein Sollsignal mit unterbrochener Linie eingezeichnet, das z.B. etwa bei 90 Prozent des Schwarzpegels liegen kann.

Das Unterschreiten des Sollsignals 21 durch das elektrische Bildsignal ist das Kriterium für eine scharf abgebildete Gitterlinie und die korrespondierenden scharf abgebildeten Objektsegmente. Die das Sollsignal 21 unterschreitenden Minima stellen daher die scharfen Gitterlinien 25 dar. Der in Fig. 3 beispielhaft wiedergegebene Verlauf eines Bildsignal-Pegels, weist daher im rechten Bereich eine größere Anzahl scharfer Objektsegmente 22 auf. Im linken Bereich ist demgegenüber nur ein im Bereich einer einzelnen scharfen Gitterlinie liegendes Objektsegment vorhanden. Der mittlere Bereich 23, der Minima mit höherem Signalpegel aufweist, kennzeichnet demgegenüber einen Bereich unscharfer, d.h. nicht in die Fokusebene $z_0$ fallender Objektsegmente.

Die als Hüllkurve 24 des Bildsignales 20 eingezeichnete Kurve kennzeichnet in etwa das Reflexionsvermögen des Objektes O an der entsprechenden Stelle x, da im Beispiel ein hoher Signalpegel einer starken Intensität des abgebildeten Bildsegmentes entspricht. Da auf das Minimum der Intensität detektiert wird, können die Koordinaten der Bildsegmente weitgehend unabhängig vom Reflexionsvermögen des Objektes sehr exakt und ohne Untersuchung der Umgebung dieses entsprechenden Objektsegmentes erfaßt werden. Hierbei kann diese Koordinatenermittlung on line und relativ einfach durchgeführt werden.

In einer eingestellten Fokusebene $z_0$ können daher zeilen- und spaltenmäßig die in diese Fokusebene $z_0$ fallenden Objektsegmente mit ihren x- und y-Koordinaten erfaßt werden. Die z-Koordinate kann dadurch bewirkt werden, daß das Objekt O entlang der optischen

- 14 -

Achse z.B. mit Hilfe einer Linear-Verschiebeeinrichtung in kleinsten Schritten verfahren wird, so daß sequentiell die dreidimensionale Form des Objektes O ermittelt werden kann. Diese Maßnahme der raschen Detektierung scharfer Objektsegmente kann jedoch nicht nur zur genauen Dimensionserfassung oder Tiefenverteilung z(x, y) herangezogen werden, sondern es kann damit auch eine Schärfentiefenerweiterung bei der Abbildung eines dreidimensionalen Objektes erreicht werden.

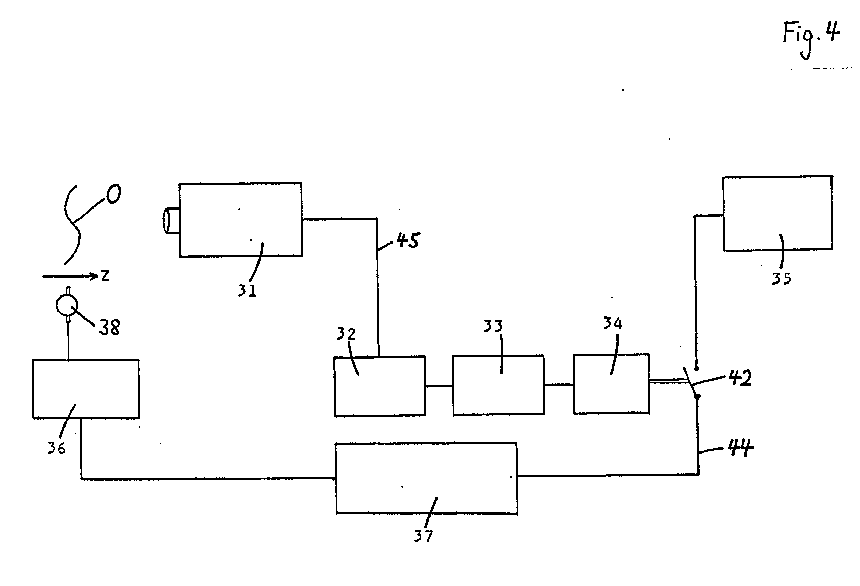

In Fig. 4 ist die Prinzipdarstellung einer Vorrichtung in Art eines Blockschaltbildes dargestellt, mit dem die Tiefenverteilung z (x, y) eines Objektes O ermittelt werden kann.

Das S-förmig angedeutete Objekt O kann gemäß Fig. 4 z.B. über einen Linear-Motor 38 in z-Richtung verschoben werden. Der Linear-Motor 38 steht mit einer Vorschubsteuerung 36 in Verbindung, so daß die Relativverschiebung bezüglich einer Bezugsebene über einen nachgeschalteten Wandler 37 als digitaler und kodierter Wert auf eine Ausgangsleitung 44 gegeben werden kann. Der Wandler 37 umfaßt dabei beispielsweise eine Analog-Digital-Umsetzung und einen Kodierer.

Das Objekt O wird in einem Bildwandler 31 abgebildet. Am Ausgang des Bildwandlers 31 wird in herkömmlicher Weise ein Bildsignal in Art eines Videosignals erzeugt. Dieses Bildsignal wird einem Demodulator 32 zugeführt. Dem Demodulator 32 ist eine Komparatoreinrichtung 33 nachgeschaltet, die wiederum eine Schalteinrichtung 34 z.B. ein monostabiles Flip-Flop ansteuert.

Die Komparatoreinrichtung 33 erhält ein Bildsignal, das beispielhaft in Fig. 3 dargestellt ist. Detektiert die Komparatoreinrichtung 33 eine scharfe Gitterlinie 25, so wird die Schalteinrichtung 34 zur Betätigung eines Schalters 42 angesteuert.
Die Ansteuerung erfolgt dabei zweckmäßigerweise während eines
Zeitintervalls, das der Periode eines Gitterlinienpaares
entspricht. Der Schalter 42 ist üblicherweise ein logischer Schalter, z.B. ein Transistorschalter.

Bei Betätigung des Schalters 42 wird ein Bildspeicher 35 mit
der Leitung 44 verbunden. Da eine Bildsynchronisation zwischen
dem Bildwandler 31 und dem Bildspeicher 35 vorgesehen ist, die
auch die Synchronisation in Horizontal- und Vertikalrichtung umfaßt, kann bei Betätigung des Schalters 42 der auf der Leitung
44 anstehende kodierte Wert in den entsprechenden Speicherplatz
übernommen werden, der dem momentan geprüften Objektsegment entspricht. Ein Einschreiben in den Speicherplatz erfolgt jedoch
nur dann, wenn das entsprechende Objektsegment bzw. die dazu
gehörende Gitterlinie als scharf im Komparator detektiert worden ist.

Da für jede eingestellte Fokusebene nur bei den als scharf detektierten Bild- und Objektsegmenten der kodierte anstehende
Wert in den Bildspeicher eingeschrieben wird, während die anderen Speicherplätze der entsprechenden Ebene unverändert
bleiben, gewinnt man über das sequentielle Fokussieren eine
genaue Formerfassung und Tiefenverteilung des zu vermessenden
Objektes.

- 16 -

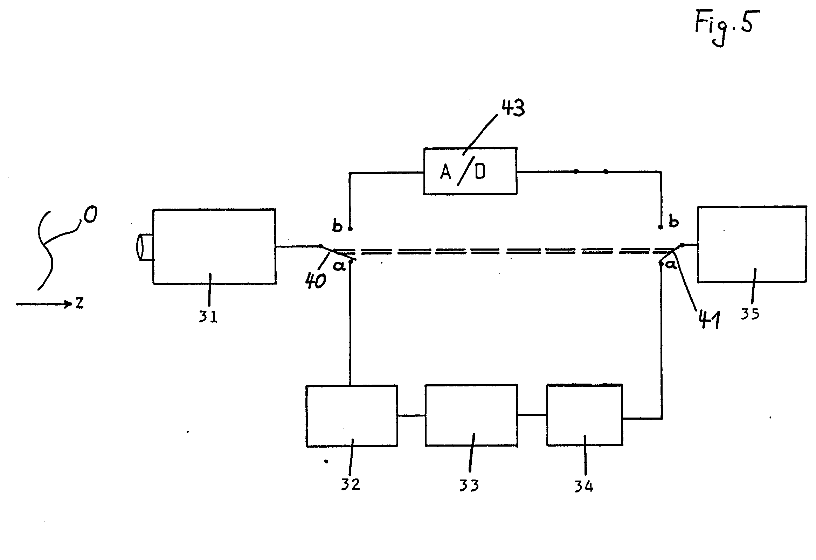

In Fig. 5 ist blockschaltartig eine Vorrichtung zur Schärfentiefenerweiterung eines Bildes dargestellt. Apparativ gesehen
steht der Bildwandler 31 bei diesem Beispiel mit dem Demodulator
32 zur Synchronabtrennung und nachgeordnet der Komparatoreinrichtung 33 mit entsprechender Schaltstufe 34 in Verbindung. Die
Schaltstufe 34 liegt über einem Schalter 41 am Bildspeicher 35.

Als Parallelschaltung zum Komparatorzweig ist zwischen dem
Bildwandler 31 und dem Bildspeicher 35 über einen synchron
betätigbaren Schalter 40, 41 ein Analog-Digital-Wandler 43 geschaltet.

In der ersten Schaltstellung a ist daher der Bildwandler 31
über den Komparatorzweig mit dem Bildspeicher 35 verbunden.
In der zweiten Schaltstellung b liegt der Bildwandler 31 allein
über den Analog-Digital-Wandler am Bildspeicher 35 an.

In der Schaltstellung a arbeitet der Komparatorzweig 32, 33, 34
wie im Beispiel nach Fig. 4. Bei Detektieren einer scharfen Gitterlinie 25 wird der entsprechende Speicherplatz maskenartig voradressiert. Dies geschieht für das Bild einer eingestellten
Fokusebene. Um jedoch ein elektrisches Bildsignal ohne Gitterlinien zu erhalten, wird für jede eingestellte Fokusebene das
Objekt gleichförmig und ohne Gitterprojektion beleuchtet. Aufgrund der im ersten Schritt a im Bildspeicher 35 erzeugten
binären Maske wird nunmehr im zweiten Schritt b nur die Bildinformation in die entsprechenden Speicherplätze über den Analog-
Digital-Wandler 34 in den Bildspeicher eingeschrieben, die im
ersten Schritt a als scharf erkannt wurden. Dieses zweistufige
Verfahren wird für jede Tiefe bzw. Fokusebene $z_i$ wiederholt,

so daß als Resultat ein schärfentiefenerweitertes Bild erhalten wird, das sich aus allen scharfen Objektsegmenten der einzelnen Fokusebenen zusammensetzt, ohne daß dieses Bild durch Gitterlinien gestört wäre.

Die vorausgehend genannte binäre Maske kann auch in dem Sinn erzeugt werden, daß über den Komparatorzweig eine elektronische Bildmaske erzeugt wird, die die unscharfen Bildsegmente für die entsprechende Fokusebene ausblendet.

Die Erfindung schafft daher einen Weg, mit dem z.B. mittels eines schnellen analogen Komparators, rasch und präzis scharfe Objektsegmente für die Formerfassung eines Objektes oder die Schärfentiefenerweiterung bei der Wiedergabe eines Objektes erreicht werden können.

**Weber & Heim**

Deutsche Patentanwälte

European Patent Attorneys

**0 196 049**

D-8000 MÜNCHEN 71
Hofbrunnstrasse 36

Telefon : (0 89) 7 91 50 50
Telex: 5 - 21 28 77
Telefax: (0 89) 7 91 52 56

– 18 –

P a t e n t a n s p r ü c h e

1. Verfahren zur optischen mehrdimensionalen Formerfassung eines Objektes, insbesondere zur Vermessung der dreidimensionalen Form eines strukturarmen, diffus streuenden Objektes, bei dem auf das zu erfassende Objekt ein Gitter projiziert und das mit dem Gitter versehene Objekt mit geringer Schärfentiefe abgebildet wird, bei dem die in der eingestellten Fokusebene $z_0$ liegenden Objektsegmente als gitterüberdeckte Bildsegmente detektiert werden und bei dem durch sequentielles Fokussieren in die Fokusebenen $z_i$ die mehrdimensionale Form des Objektes erfaßt wird, wobei die in der Fokusebene $z_0$ liegenden Objektsegmente in der Abbildungsebene scharf wiedergegeben werden,

d a d u r c h   g e k e n n z e i c h n e t ,

daß das Bild des mit dem Gitter versehenen Objektes in elektrische Signale umgewandelt wird, daß zur Detektierung der gitterüberdeckten Bildsegmente als scharf abgebildete Bildsegmente die elektrischen Signale auf Unter- oder Überschreiten eines vorgebbaren Signalpegels, insbesondere eines vorgebbaren Signalpegels für das abgebildete Gitter, geprüft werden, und daß für jede eingestellte Fokusebene $z_i$ des sequentiellen Fokussierens die detektierten gitterüberdeckten, scharf abgebildeten Bildsegmente und $z_i$ als Objektparameter, Bildsegmente oder dergleichen gespeichert und bei Bedarf ausgelesen werden.

2. Verfahren nach Anspruch 1,

   dadurch gekennzeichnet,

   daß nach dem Speichern der scharfen gitterüberdeckten Bildsegmente für jede eingestellte Fokusebene das gitterlose Objekt abgebildet wird, daß die dazugehörenden gitterlosen Bildsegmente des Objektes in/auf den Speicherbereichen der als scharf detektierten gitterüberdeckten Bildsegmente gespeichert werden, und daß die gespeicherten gitterlosen Bildsegmente über alle Fokusebenen $z_i$ als Objektbild mit erweiterter Schärfentiefe ausgelesen werden.

3. Verfahren nach Anspruch 1 oder 2,

   dadurch gekennzeichnet,

   daß die elektrischen Signale der gitterüberdeckten Bildsegmente bezüglich ihres gitterspezifischen Signals auf ein Unterschreiten eines minimalen Signalpegels geprüft werden.

4. Verfahren nach einem der Ansprüche 1 bis 3,

   dadurch gekennzeichnet,

   daß die Projektion des Gitters auf das Objekt und/oder die Abbildung des Objektes mit oder ohne Gitter mit geringer Schärfentiefe durchgeführt wird.

5. Verfahren nach einem der Ansprüche 1 bis 4,

   dadurch gekennzeichnet,

   daß jedem scharfen Bildsegment Daten, insbesondere die Koordinaten, seiner Fokusebene zugeordnet werden.

6. Verfahren nach einem der Ansprüche 1 bis 5,
   dadurch  g e k e n n z e i c h n e t ,
   daß die scharfen gitterüberdeckten Bildsegmente jeder
   Fokusebene eine Speichermaske bilden, in die die entsprechenden gitterlosen Bildsegmente der Fokusebene
   abgespeichert werden.

7. Vorrichtung zur Ermittlung und Speicherung der in
   einer Fokusebene liegenden Bildsegmente für die optische
   mehrdimensionale Formerfassung eines Objektes mittels eines
   auf das Objekt projizierten Gitters, insbesondere zur Durchführung eines Verfahrens nach einem der Ansprüche 1 bis 6,
   dadurch  g e k e n n z e i c h n e t ,
   daß ein Bildwandler (31) zur Umwandlung der optisch abgebildeten Objektsegmente in elektrische Bildsignale vorgesehen ist, daß die elektrischen Bildsignale zur Ermittlung
   einer Abweichung gegenüber einem vorgebbaren Sollsignal
   einer Komparatorschaltung (33) zugeführt sind, und daß
   bei einer definierten Abweichung vom Sollsignal eine der
   Komparatorschaltung (33) zugeordnete Schaltstufe (34)
   einen dem abgetasteten scharfen Bildsegment zugeordneten
   Speicherplatz in einer Bildspeicher-Einrichtung (35)
   mit Informationen belegt.

8. Vorrichtung nach Anspruch 7,
   dadurch  g e k e n n z e i c h n e t ,
   daß der Bildwandler (31) eine Aufnahmeröhre aufweist, die
   z.B. nach dem Prinzip eines Ikonoskops, eines Orthikons,
   eines Vidikons oder eines Festkörper-Sensors arbeitet.

9. Vorrichtung nach einem der Ansprüche 7 oder 8,
   dadurch gekennzeichnet,
   daß beim Detektieren eines scharfen Bildsegmentes die
   Schaltstufe (34) mit einem Zeitintervall triggerbar ist,
   das der Periode eines Gittersignales entspricht.

Fig. 1

Fig. 2

Fig. 3

Bildsignal-Pegel

Fig. 4

4/5

0 196 049

Fig.5

A/D  43

35  41  b  a  34  33  32  40  b  a  31

0  z